# EUROPEAN PATENT APPLICATION

(11) **EP 4 470 708 A1**
(43) Date of publication of application: **04.12.2024**
(21) Application number: 22924181.5
(22) Date of filing: 22.12.2022
(51) Int. Cl.: B23K 26/00, B23K 26/14

(54) **LASER PROCESSING MACHINE, LASER PROCESSING METHOD, AND LASER PROCESSING PROGRAM**

(30) Priority: 26.01.2022 JP 2022009988
(71) Applicant: Amada Co., Ltd., Isehara-shi, Kanagawa 259-1196 (JP)
(72) Inventor: HARUMIYA Bunyou, Isehara-shi, Kanagawa 259-1196 (JP)
(74) Representative: Grünecker Patent- und Rechtsanwälte PartG mbB
(86) International application number: PCT/JP2022/047450
(87) International publication number: WO 2023/145334

(57) **Abstract**

Provided is a laser processing machine configured to engrave, in a surface of a workpiece, a matrix-type two-dimensional code in which a first cell as a unit irradiation area and a second cell as a unit non-irradiation area are arranged in a desired array pattern in a first direction and a second direction orthogonal to the first direction, the laser processing machine being provided with a laser processing head configured to irradiate the workpiece with a laser beam and a control unit configured to control the laser processing head, wherein the control unit includes a processing pattern selection unit, and the processing pattern selection unit is configured to select a tentative processing pattern from a plurality of processing patterns of the matrix-type two-dimensional code on a basis of a selection condition.

## Description

### Technical Field

The present invention relates to a laser processing machine, a laser processing method, and a laser processing program.

### Background Art

A known laser marking device of the related art includes a laser light source that emits a laser beam and a controller including control means to scan and radiate the laser beam, wherein the laser beam is scanned onto an object to be machined to form characters, figures, symbols, or the like, the laser marking device characterized by including cooling means to cool the object to be machined during the marking (Patent Literature 1, etc.). The laser marking device of Patent Literature 1 can form a two-dimensional code on an object to be machined.

### Citation List

### Patent Literature

Patent Literature 1:JP 2001-232848 A

### Summary

### Technical Problem

In the laser marking device of the related art, when engraving a two-dimensional code with a laser beam, the processing conditions are adjusted because the color and size of an engraved area changes depending on a material of an object to be engraved, laser beam power, and the like, affecting the readability of the two-dimensional code.

However, there is a problem in that even if the processing conditions are adjusted and a two-dimensional code is engraved in the same object to be machined, the readability of the two-dimensional code changes depending on the number of cells and a code size of the two-dimensional code to be engraved.

One aspect of the present invention is a laser processing machine, a laser processing method, and a laser processing program capable of engraving an easily readable matrix-type two-dimensional code.

### Solution to Problem

A laser processing machine according to one aspect of the present invention is a laser processing machine configured to engrave, in a surface of a workpiece, a matrix-type two-dimensional code in which a first cell as a unit irradiation area and a second cell as a unit non-irradiation area are arranged in a desired array pattern in a first direction and a second direction orthogonal to the first direction, the laser processing machine being provided with a laser processing head configured to irradiate the workpiece with a laser beam and a control unit configured to control the laser processing head, wherein the control unit includes a processing pattern selection unit, and the processing pattern selection unit is configured to select a tentative processing pattern from a plurality of processing patterns of the matrix-type two-dimensional code on a basis of a selection condition.

A laser processing method according to one aspect of the present invention is a laser processing method for engraving, in a surface of a workpiece, a matrix-type two-dimensional code in which a first cell as a unit irradiation area and a second cell as a unit non-irradiation area are arranged in a desired array pattern in a first direction and a second direction orthogonal to the first direction, the laser processing method selecting a tentative processing pattern from a plurality of processing patterns of the matrix-type two-dimensional code on a basis of a selection condition.

A laser processing program according to one aspect of the present invention is a laser processing program for engraving, in a surface of a workpiece, a matrix-type two-dimensional code in which a first cell as a unit irradiation area and a second cell as a unit non-irradiation area are arranged in a desired array pattern in a first direction and a second direction orthogonal to the first direction, the laser processing program causing a control unit to perform a selection process for selecting a tentative processing pattern from a plurality of processing patterns of the matrix-type two-dimensional code on a basis of a selection condition.

According to a laser processing machine, a laser processing method, and a laser processing program as in one aspect of the present invention, an easily readable matrix-type two-dimensional code can be engraved by selecting a tentative processing pattern on a basis of a selection condition.

### Advantageous Effects of Invention

According to a laser processing machine, a laser processing method, and a laser processing program as in one aspect of the present invention, an easily readable matrix-type two-dimensional code can be engraved.

### Brief Description of Drawings

[Figure 1] Figure 1 is a schematic diagram illustrating a laser processing machine according to an embodiment of the present invention.
[Figure 2] Figure 2 is a schematic diagram illustrating a laser processing head of the present embodiment.
[Figure 3] Figure 3 is a functional block diagram schematically illustrating a control device of the present embodiment.
[Figure 4] Figure 4 is a diagram illustrating an example of a pattern selection table of the present embodiment.
[Figure 5] Figure 5 is a diagram illustrating a row and column layout of cells in a matrix-type two-dimensional code of the present embodiment.
[Figure 6] Figure 6 is a diagram illustrating reciprocating one-pass processing by the laser processing machine of the present embodiment.
[Figure 7] Figure 7 is a diagram illustrating one-way one-pass processing by the laser processing machine of the present embodiment.
[Figure 8] Figure 8 is a diagram illustrating reciprocating two-pass processing by the laser processing machine of the present embodiment.
[Figure 9] Figure 9 is a diagram illustrating one-way two-pass processing by the laser processing machine of the present embodiment.
[Figure 10] Figure 10 is a diagram illustrating a modification of the reciprocating two-pass processing by the laser processing machine of the present embodiment.
[Figure 11] Figure 11 is a diagram illustrating a modification of the one-way two-pass processing by the laser processing machine of the present embodiment.
[Figure 12] Figure 12 is a flowchart illustrating an example of a laser processing method using the laser processing machine of the present embodiment.

### Description of Embodiment

Hereinafter, the best embodiment for carrying out the present invention will be described using the drawings. Note that the following embodiment does not limit the invention as in the claims, and not all of the combinations of features described in the embodiment are essential to the solution of the invention.

### [Overall configuration of laser processing machine according to present embodiment]

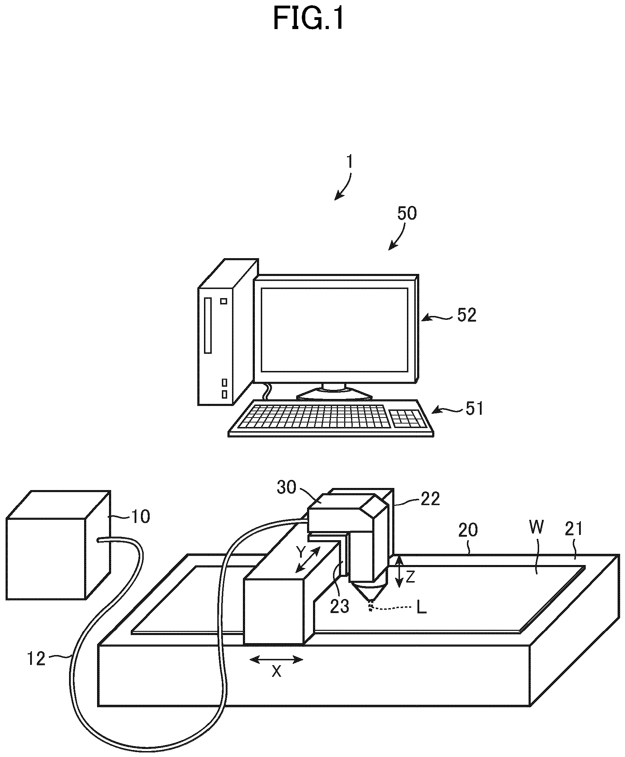

Figure 1 is a schematic diagram illustrating a laser processing machine according to the embodiment of the present invention.

First, Figure 1 will be referenced to give an outline of a laser processing machine 1 according to the embodiment of the present invention. The laser processing machine 1 according to the present embodiment is a laser processing machine that engraves, in a surface of a workpiece W, a matrix-type two-dimensional code in which a first cell as a unit irradiation area and a second cell as a unit non-irradiation area are arranged in a desired array pattern in a first direction and a second direction orthogonal to the first direction.

Note that in the present embodiment, the first direction is a Y-axis direction in Figure 1 and the second direction is an X-axis direction in Figure 1, but the directions are not limited thereto.

A matrix-type two-dimensional code is a two-dimensional code having an array pattern of n rows and m columns (where n and m are integers equal to or greater than 2) in which square first and second cells are plurally arranged in a freely chosen array. Specifically, a matrix-type two-dimensional is a square or rectangular two-dimensional code such as a QR Code^{®} or a Data Matrix.

The laser processing machine 1 includes a laser processing head 30 that irradiates the workpiece W with a laser beam L, and a control device 50. The laser processing machine 1 also includes a laser oscillator 10 that generates and emits the laser beam L, a process fiber 12 that conveys the laser beam L emitted by the laser oscillator 10 to the laser processing head 30, a moving mechanism 20 that moves the laser processing head 30 in the first and second directions, a processing table 21 on which the workpiece W is mounted, and an assist gas supply device (not illustrated).

The laser oscillator 10 generates the laser beam L, and supplies the laser beam L to the laser processing head 30 via the process fiber 12. The laser oscillator suitably used as the laser oscillator 10 is, for example, a type in which a seed light emitted by a laser diode excites and amplifies Yb or the like in a resonator to emit the laser beam L at a predetermined wavelength, or a type that directly uses the laser beam L emitted by a laser diode. Examples of the laser oscillator 10 as a solid-state laser oscillator include a fiber laser oscillator, a YAG laser oscillator, a disk laser oscillator, a DDL oscillator, and the like.

The laser oscillator 10 emits the laser beam L in a 1 µm band with a wavelength of 900 nm to 1100 nm. For example, the DDL oscillator emits the laser beam L with a wavelength of 910 nm to 950 nm, while the fiber laser oscillator emits the laser beam L with a wavelength of 1060 nm to 1080 nm.

The moving mechanism 20 is configured to drive at least one of the laser processing head 30 or the processing table 21 so that the laser processing head 30 and the processing table 21 move relative to one another. Specifically, the moving mechanism 20 includes an X-axis carriage 22 and a Y-axis carriage 23. The X-axis carriage 22 is configured in a gate type, is disposed straddling the processing table 21, and is configured to be freely movable over the processing table 21 in the X-axis direction. The Y-axis carriage 23 is attached to the X-axis carriage 22 and is configured to be freely movable in the Y-axis direction perpendicular to the X-axis direction. Also, the laser processing head 30 is attached to an end of the Y-axis carriage 23. By being provided with such a configuration, the moving mechanism 20 is configured to move the laser processing head 30 in the X-axis direction, the Y-axis direction, or any combined direction of the X and Y axes, along the surface of the workpiece W mounted on the processing table 21.

Note that instead of moving the laser processing head 30 along the surface of the workpiece W, the moving mechanism 20 may also be configured such that a position of the laser processing head 30 is fixed and the workpiece W is moved relative to the laser processing head 30.

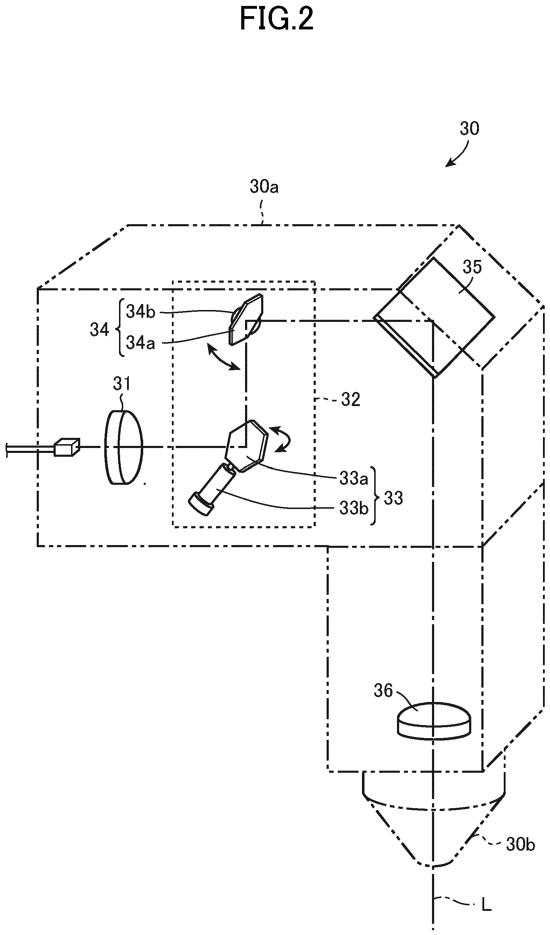

Figure 2 is a schematic diagram illustrating the laser processing head of the present embodiment.

The laser processing head 30 irradiates the workpiece W on the processing table 21 with the laser beam L conveyed from the laser oscillator 10 via the process fiber 12. Specifically, as illustrated in Figure 2, the laser processing head 30 includes a housing 30a including an irradiation center axis of the laser beam L, and inside this housing 30a, the laser processing head 30 includes a collimating lens 31 entered by the laser beam L emitted from an emitting end of the process fiber 12, a galvano scanner unit 32, and a bend mirror 35 by which the laser beam L emitted from the galvano scanner unit 32 is reflected downward in a Z-axis direction perpendicular to the X and Y axes. The laser processing head 30 also includes a condensing lens 36 that focuses the laser beam L reflected by the bend mirror 35

A tip portion of the housing 30a is provided with a nozzle 30b having a circular aperture for irradiating the workpiece W with the laser beam L. This nozzle 30b has a nozzle function for directing a flow of gas supplied from the assist gas supply device to the workpiece W coaxially with the laser beam L in order to remove the molten workpiece W, and is detachably provided on the housing 30a.

The condensing lens 36 is configured to move freely in directions approaching the workpiece W and going away from the workpiece W by means of a drive section and a moving mechanism not illustrated, in order to adjust a focal position of the laser beam L.

The galvano scanner unit 32 includes a first scanning section 33 and a second scanning section 34, and is configured to vibrate the laser beam L. The first scanning section 33 includes a first scanning mirror 33a to reflect the laser beam L emitted by the collimating lens 31 and a first drive section 33b to rotate the first scanning mirror 33a to be at a predetermined angle. The second scanning section 34 includes a second scanning mirror 34a to reflect the laser beam L emitted from the first scanning mirror 33a and a second drive section 34b to rotate the second scanning mirror 34a to be at a predetermined angle.

The first drive section 33b and the second drive section 34b can reciprocally vibrate the first scanning mirror 33a and the second scanning mirror 34a in a predetermined angular range, respectively, on the basis of control by the control device 50. By being provided with such a configuration, the galvano scanner unit 32 can vibrate the laser beam L radiated from the laser processing head 30 to the workpiece W by reciprocally vibrating one or both of the first scanning mirror 33a and the second scanning mirror 34a. In the present embodiment, it is configured such that a user can select at the time of processing whether or not to use the function of vibrating the laser beam L, but the configuration is not limited thereto.

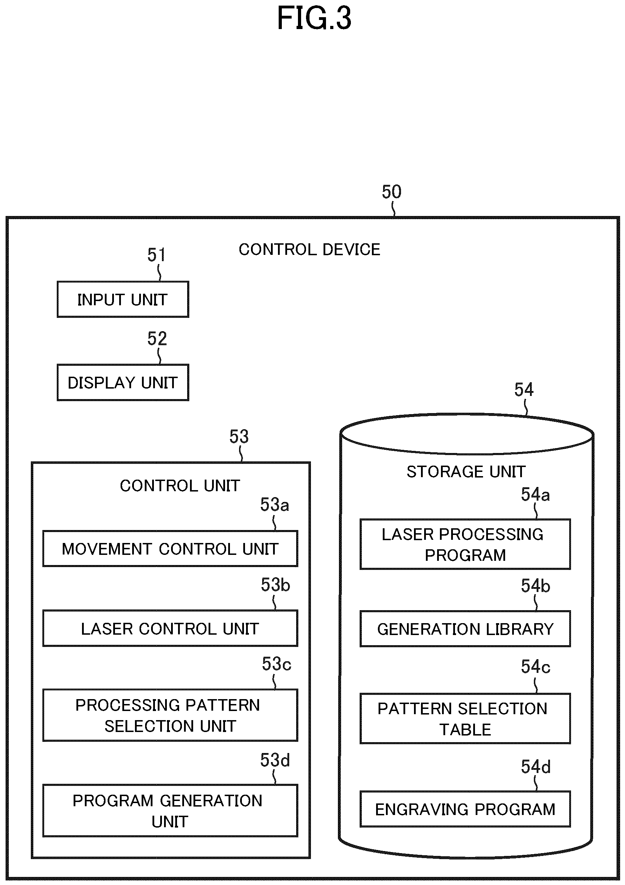

Figure 3 is a functional block diagram schematically illustrating a control device of the present embodiment.

The control device 50 is an example of a control device that controls each section of the laser processing machine 1. As illustrated in Figure 3, the control device 50 includes an input unit 51, a display unit 52, a control unit 53, and a storage unit 54.

The input unit 51 is formed by an input device such as a keyboard, a mouse, a push-button/switch, or the like. By operating the input unit 51, in addition to functions for inputting information normally required in the laser processing machine 1, it is possible to perform operations such as selecting a laser processing program 54a described later in the storage unit 54, turning on/off engraving processing for a matrix-type two-dimensional code, turning on/off the function for vibrating the laser beam L, for example.

The display unit 52 includes a display as a display device, and in addition to the functions of a display screen normally required in the laser processing machine 1, displays a selection screen for selecting a laser processing program 54a, for example. The display unit 52 may also be configured as a touch panel that includes the functions of the input unit 51. In the case where the display unit 52 is configured as the touch panel, the user can input various information, such as the selection of a laser processing program 54a, to the control device 50 by operating the display unit 52, for example.

Note that the configuration of the input unit 51 and the display unit 52 is not limited to the configuration described above, and insofar as the configuration has equivalent functions in place of the input unit 51 and the display unit 52 (such as remotely usable display means and input means, for example), the configuration is not limited thereto.

The control unit 53 includes a movement control unit 53a to control the moving mechanism 20, a laser control unit 53b to control the laser processing head 30, a processing pattern selection unit 53c, and a program generation unit 53d. The movement control unit 53a is configured to control movement operations by the X-axis carriage 22 and the Y-axis carriage 23 of the moving mechanism 20.

The laser control unit 53b is configured to be able to control the power, intensity, and focal point adjustment of the laser beam L radiated from the laser processing head 30, and the driving of a first drive section 33b and a second drive section 34b of the galvano scanner unit 32 of the laser processing head 30.

The processing pattern selection unit 53c selects a tentative processing pattern from a plurality of processing patterns of matrix-type two-dimensional codes on the basis of a selection condition. Specifically, the processing pattern selection unit 53c selects a tentative processing pattern from a pattern selection table 54c described later in the storage unit 54.

The selection condition is various information included in the laser processing program 54a described later in the storage unit 54. The selection condition includes, for example, the type, the number of cells, and the code size of the matrix-type two-dimensional code to be engraved. The selection condition may also include information pertaining to an assist gas to be supplied from the assist gas supply device, such as the type of the assist gas and the pressure of the assist gas, for example. Further, the selection condition may also include information pertaining to the laser beam L to be radiated from the laser processing head 30, such as the power of the laser beam L and the frequency of the laser beam L, for example. Further still, information pertaining to the material of the workpiece W may be included, such as the material, the thickness, and the presence or absence of a surface treatment, for example.

Note that the selection condition is not limited to the information described above, and various information affecting the precision of the engraving of matrix-type two-dimensional codes can be adopted.

The configuration may also allow for manual changing of the tentative processing pattern selected by the processing pattern selection unit 53c. Specifically, the tentative processing pattern selected by the processing pattern selection unit 53c is displayed on the display unit 52. The user can check the processing path, processing time, and the like of the tentative processing pattern displayed on the display unit 52. After having checked the tentative processing pattern, if the user wants to change the tentative processing pattern to another processing pattern, the user can operate the input unit 51 to manually select and change the processing pattern.

The program generation unit 53d generates an engraving program 54d described later on the basis of a processing pattern. Specifically, the program generation unit 53d generates the engraving program 54d on the basis of the tentative processing pattern or the processing pattern selected manually by the user and engraving information described later that is included in the laser processing program 54a, and stores the generated engraving program 54d in the storage unit 54. Also, in the case where engraving processing is turned off, the program generation unit 53d is configured to be able to generate a dummy program (empty program) as a substitute program for the engraving program 54d.

Note that the program generation unit 53d may also generate an engraving program 54d for a processing pattern other than the tentative processing pattern and the processing pattern selected manually by the user. Specifically, when a laser processing program 54a to be used for processing is selected, the program generation unit 53d may generate an engraving program 54d individually for all processing patterns on the basis of the engraving information of the laser processing program 54a.

The storage unit 54 includes a storage medium such as RAM, ROM, an HDD, or an SSD, and stores various data in a readable and writable way. The storage unit 54 stores the laser processing program 54a for enabling the control unit 53 to exercise control of the laser processing machine 1, a generation library 54b, a pattern selection table 54c, and the engraving program 54d. The storage unit 54 also stores programs required for control of each unit of the control device 50.

The laser processing program 54a includes: information pertaining to the workpiece W to be processed, such as the material and thickness, for example; information pertaining to operations by the moving mechanism 20, the laser processing head 30, and the assist gas supply device for executing main processing of the workpiece W; and engraving information. The engraving information is, for example, the number of cells and the code size of the matrix-type two-dimensional code to be engraved, and information (such as a character string) to be stored in the matrix-type two-dimensional code.

The laser processing program 54a has a processing pattern selection function and a laser processing function. The processing pattern selection function causes the control unit 53 to perform a selection process for selecting a tentative processing pattern from a plurality of processing patterns of matrix-type two-dimensional codes on the basis of a selection condition. The processing pattern selection function also causes the control unit 53 to perform an engraving program generation process for generating the engraving program 54d on the basis of the tentative processing pattern or the processing pattern selected by the user. Further, in the case where engraving processing is turned off, the processing pattern selection function causes the control unit 53 to perform a dummy program generation process for generating a dummy program.

The laser processing function causes the control unit 53 to perform: a main processing process for controlling the moving mechanism 20 and the laser processing head 30 to perform main processing, such as cutting and drilling the workpiece W; an engraving program calling process for calling the engraving program 54d; and an engraving process for controlling the moving mechanism 20 and the laser processing head 30 on the basis of the engraving program 54d to engrave a matrix-type two-dimensional code in the surface of the workpiece W according to the tentative processing pattern or the processing pattern selected by the user.

Specifically, the selection process causes the processing pattern selection unit 53c of the control unit 53 to select a tentative processing pattern from the pattern selection table 54c. The engraving program generation process calls the generation library 54b and causes the program generation unit 53d of the control unit 53 to generate the engraving program 54d.

The generation library 54b is a program according to which the program generation unit 53d generates the engraving program 54d. The generation library 54b causes the program generation unit 53d to perform a two-dimensional code generation process for generating an array pattern of first and second cells in a matrix-type two-dimensional code on the basis of information to be stored in the matrix-type two-dimensional code to be engraved. The generation library 54b also causes the program generation unit 53d to generate the engraving program 54d for the generated matrix-type two-dimensional code.

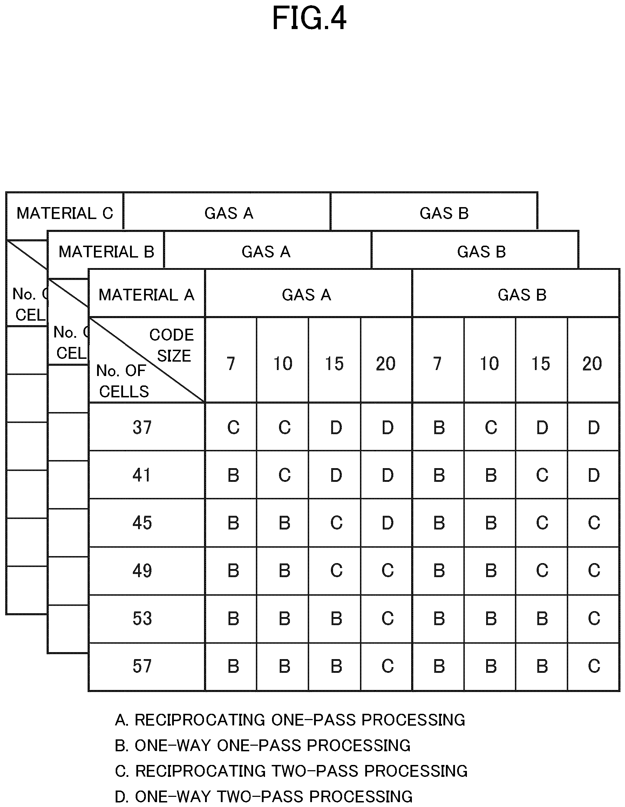

Figure 4 is a diagram illustrating an example of a pattern selection table of the present embodiment.

As illustrated in Figure 4, the pattern selection table 54c includes a plurality of processing patterns of matrix-type two-dimensional codes, with suitable processing patterns prepared for different selection conditions. The plurality of processing patterns of matrix-type two-dimensional codes include a first processing pattern (reciprocating one-pass processing and one-way one-pass processing) in which first cells are irradiated with the laser beam L along the first direction, and a second processing pattern (reciprocating, two-pass processing and one-way, two-pass processing) in which first cells are irradiated with the laser beam L along the first direction and then irradiated with the laser beam L again along the second direction.

Note that the pattern selection table 54c according to the present embodiment is divided by material, but is not limited thereto, and various freely chosen configurations can be adopted.

The following describes processing patterns of matrix-type two-dimensional codes in detail. Note that a processing pattern of a matrix-type two-dimensional code is not limited to the processing patterns detailed below, and various freely chosen processing patterns can be adopted.

### [Reciprocating one-pass processing]

In reciprocating one-pass processing, the control unit 53 of the control device 50 controls the moving mechanism 20 to irradiate, with the laser beam L, first cells in a j-th column (where j is an integer equal to or greater than 1 and less than or equal to m) along a first forward direction, and then irradiate, with the laser beam L, first cells in a column other than the j-th column along a first reverse direction.

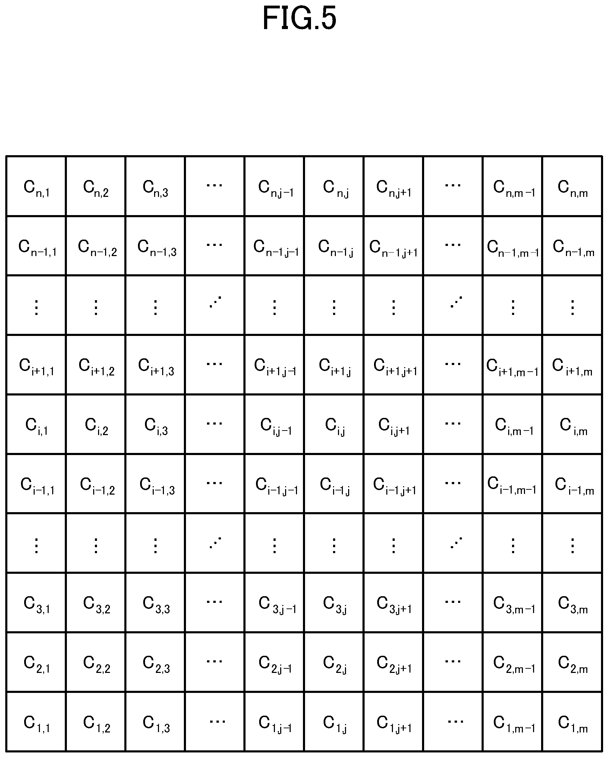

Figure 5 is a diagram illustrating a row and column layout of cells in a matrix-type two-dimensional code of the present embodiment.

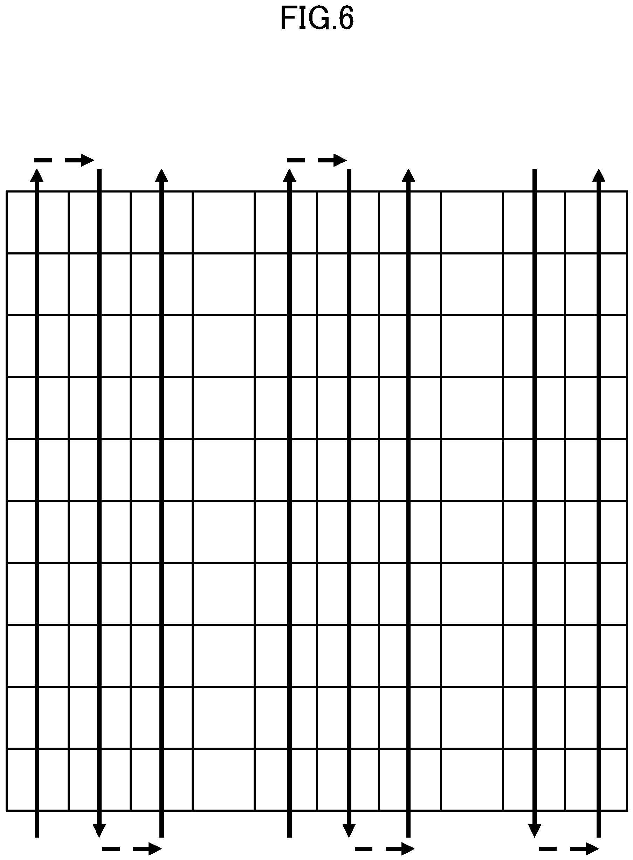

Figure 6 is a diagram illustrating reciprocating one-pass processing by a laser processing machine of the present embodiment. Arrows in Figure 6 indicate movement directions of the laser processing head 30 (laser beam L) .

In the reciprocating one-pass processing, as illustrated in Figures 5 and 6, the laser processing machine 1 uses the moving mechanism 20 to move the laser processing head 30 from cell C_{1,1} to cell C_{n,1} in a first column along the first forward direction, and irradiates each first cell in the first column with the laser beam L. Next, the laser processing machine 1 uses the moving mechanism 20 to move the laser processing head 30 from cell C_{n,2} to cell C_{1,2} in a second column along the first reverse direction, and irradiates each first cell in the second column with the laser beam L. The above is repeated similarly to the m-th column.

### [One-way one-pass processing]

In one-way one-pass processing, the control unit 53 of the control device 50 controls the moving mechanism 20 to irradiate, with the laser beam L, first cells in the j-th column along the first forward direction, and then irradiate, with the laser beam L, first cells in a column other than the j-th column along the first forward direction.

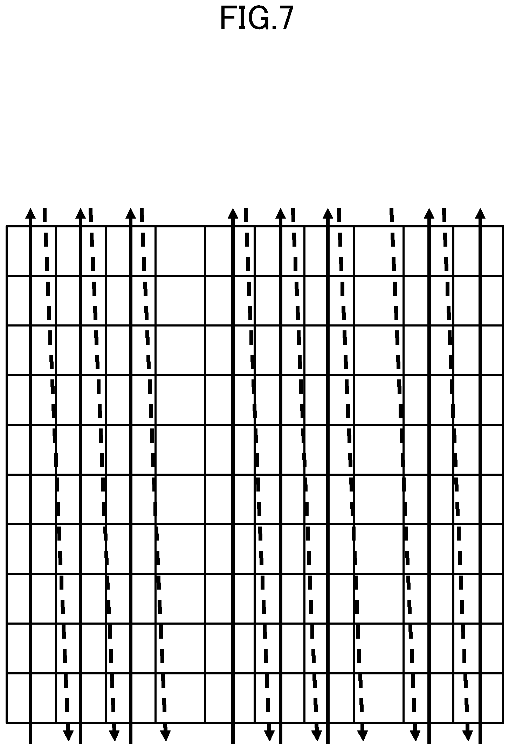

Figure 7 is a diagram illustrating one-way one-pass processing by a laser processing machine of the present embodiment. Arrows in Figure 7 indicate the movement directions of the laser processing head 30 (laser beam L) .

In one-way one-pass processing, as illustrated in Figures 5 and 7, the laser processing machine 1 uses the moving mechanism 20 to move the laser processing head 30 from cell C_{1,1} to cell C_{n,1} in the first column along the first forward direction, and irradiates each first cell in the first column with the laser beam L. Next, the laser processing machine 1 uses the moving mechanism 20 to move the laser processing head 30 from cell C_{1,2} to cell C_{n,2} in the second column along the first forward direction, and irradiates each first cell in the second column with the laser beam L. The above is repeated similarly to the m-th column.

### [Reciprocating two-pass processing]

In reciprocating two-pass processing, the control unit 53 of the control device 50 controls the moving mechanism 20 to: irradiate, with the laser beam L, first cells in the j-th column along the first forward direction, and then irradiate, with the laser beam L, first cells in a column other than the j-th column along the first reverse direction; and irradiate, with the laser beam L, first cells in an i-th row (where i is an integer equal to or greater than 1 and less than or equal to n) along a second forward direction, and then irradiate, with the laser beam L, first cells in a row other than the i-th row along a second reverse direction.

In reciprocating two-pass processing, the laser processing machine 1 first irradiates, with the laser beam L, each first cell in the first to m-th columns from the first forward and reverse directions, similarly to reciprocating one-pass processing. Thereafter, the laser processing machine 1 irradiates, with the laser beam L, each first cell in the first to n-th rows in the second reverse and forward directions, starting from the row containing the cell that the laser processing head 30 (laser beam L) last passed.

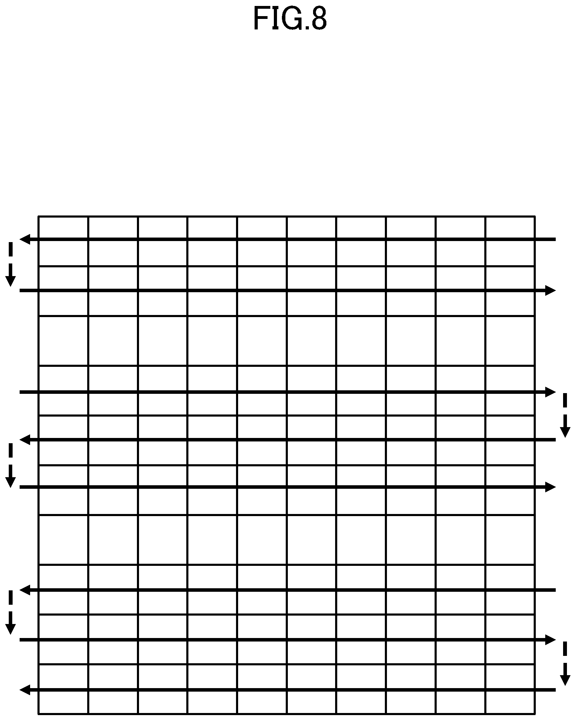

Figure 8 is a diagram illustrating reciprocating two-pass processing by a laser processing machine of the present embodiment. Arrows in Figure 8 indicate the movement directions of the laser processing head 30 (laser beam L).

In the case where the matrix-type two-dimensional code has an odd number of columns (m is an odd number), as illustrated in Figures 5 and 8, the laser processing machine 1 uses the moving mechanism 20 to move the laser processing head 30 from cell C_{n,m} to cell C_{n,1} in the n-th row along the second reverse direction, and irradiates each first cell in the n-th row with the laser beam L. Next, the laser processing machine 1 uses the moving mechanism 20 to move the laser processing head 30 from cell C_{n-1,1} to cell C_{n-1,m} in the (n-1)-th row along the second forward direction, and irradiates each first cell in the (n-1)-th row with the laser beam L. The above is repeated similarly to the first row.

Also, in the case where the matrix-type two-dimensional code has an even number of columns (m is an even number), the laser processing machine 1 uses the moving mechanism 20 to move the laser processing head 30 from cell C_{1,m} to cell C_{1,1} in the first row along the second reverse direction, and irradiates each first cell in the first row with the laser beam L. Next, the laser processing machine 1 uses the moving mechanism 20 to move the laser processing head 30 from cell C_{2,1} to cell C_{2,m} in the second row along the second forward direction, and irradiates each first cell in the second row with the laser beam L. The above is repeated similarly to the n-th row.

Note that the processing from the second direction in reciprocating two-pass processing is not limited to the above-described processing. For example, in the case where the matrix-type two-dimensional code has an odd number of columns, the laser processing machine 1 uses the moving mechanism 20 to move the laser processing head 30 from cell C_{n,1} to cell C_{n,m} in the n-th row along the second forward direction, and irradiates each first cell in the n-th row with the laser beam L. Next, the laser processing machine 1 uses the moving mechanism 20 to move the laser processing head 30 from cell C_{n-1,m} to cell C_{n-1,1} in the (n-1)-th row along the second reverse direction, and irradiates each first cell in the (n-1)-th row with the laser beam L. The above is repeated similarly to the first row.

Also, in the case where the matrix-type two-dimensional code has an even number of columns, the laser processing machine 1 uses the moving mechanism 20 to move the laser processing head 30 from cell C_{1,1} to cell C_{1,m} in the first row along the second forward direction, and irradiates each first cell in the first row with the laser beam L. Next, the laser processing machine 1 uses the moving mechanism 20 to move the laser processing head 30 from cell C_{2,m} to cell C_{2,1} in the second row along the second reverse direction, and irradiates each first cell in the second row with the laser beam L. The above is repeated similarly to the n-th row.

Moreover, processing from the second direction is also possible regardless of the number of columns in the matrix-type two-dimensional code. For example, the moving mechanism 20 is used to move the laser processing head 30 from cell C_{1,1} to cell C_{1,m} in the first row along the second forward direction, and each first cell in the first row is irradiated with the laser beam L. Next, the laser processing machine 1 uses the moving mechanism 20 to move the laser processing head 30 from cell C_{2,m} to cell C_{2,1} in the second row along the second reverse direction, and irradiates each first cell in the second row with the laser beam L. The above is repeated similarly to the n-th row.

### [Modification of reciprocating two-pass processing]

Reciprocating two-pass processing may irradiate, with the laser beam L, each first cell in each column along the first direction and then irradiate, with the laser beam L, each first cell in each row along the second direction, as described above, or irradiate with the laser beam L in alternation along the first direction and the second direction. Specifically, the control unit 53 of the control device 50 controls the moving mechanism 20 to: irradiate, with the laser beam L, first cells in the j-th column along the first forward direction, and then irradiate, with the laser beam L, first cells in the (i+1)-th row along the second forward direction; and irradiate, with the laser beam L, first cells in the (j+1)-th column along the first reverse direction, and then irradiate, with the laser beam L, first cells in the i-th row along the second reverse direction. Note that in the modification of reciprocating two-pass processing and the modification of one-way two-pass processing described later, i is taken to be equal to or greater than 1 and less than n, and j is taken to be equal to or greater than 1 and less than m.

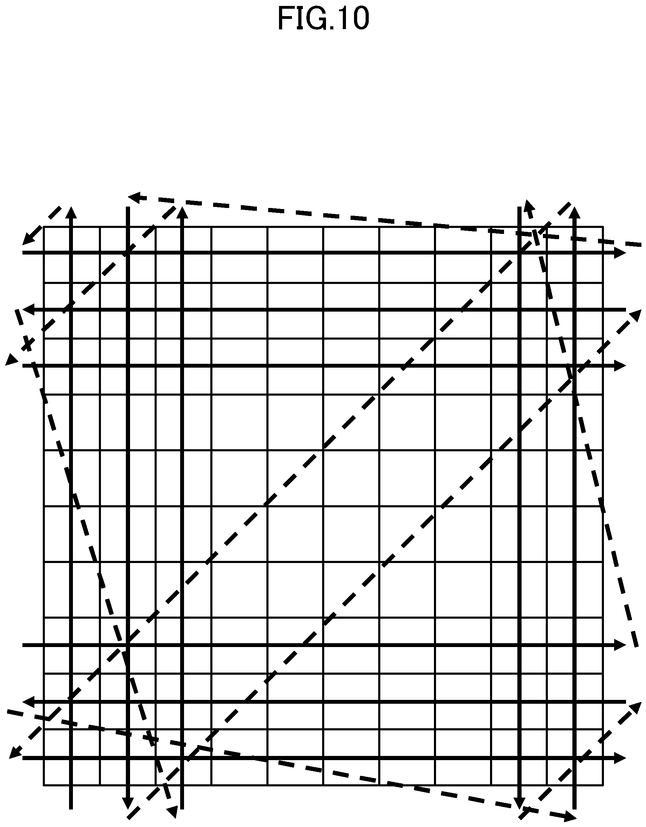

Figure 10 is a diagram illustrating a modification of reciprocating two-pass processing by a laser processing machine of the present embodiment. Arrows in Figure 10 indicate the movement directions of the laser processing head 30 (laser beam L).

In the modification of reciprocating two-pass processing, as illustrated in Figures 5 and 10, the laser processing machine 1 uses the moving mechanism 20 to move the laser processing head 30 from cell C_{1,1} to cell C_{n,1} in the first column along the first forward direction, and irradiates each first cell in the first column with the laser beam L. Next, the laser processing machine 1 uses the moving mechanism 20 to move the laser processing head 30 from cell C_{n,1} to cell C_{n,m} in the n-th row along the second forward direction, and irradiates each first cell in the n-th row with the laser beam L.

Subsequently, the laser processing machine 1 uses the moving mechanism 20 to move the laser processing head 30 from cell C_{n,2} to cell C_{1,2} in the second column along the first reverse direction, and irradiates each first cell in the second column with the laser beam L. Thereafter, the laser processing machine 1 uses the moving mechanism 20 to move the laser processing head 30 from cell C_{n-1,m} to cell C_{n-1,1} in the (n-1)-th row along the second reverse direction, and irradiates each first cell in the (n-1)-th row with the laser beam L.

Similarly, each first cell in the j-th column is irradiated with the laser beam L along the first forward direction, and each first cell in the (i+1)-th row is irradiated with the laser beam L along the second forward direction. Also, each first cell in the (j+1)-th column is irradiated with the laser beam L along the first reverse direction, and each first cell in the i-th row is irradiated with the laser beam L along the second reverse direction. Further still, each first cell in the (j+2)-th column is irradiated with the laser beam L along the first forward direction and so on, and each first cell in all rows and columns is irradiated with the laser beam L.

### [One-way two-pass processing]

In one-way two-pass processing, the control unit 53 of the control device 50 controls the moving mechanism 20 to: irradiate, with the laser beam L, first cells in the j-th column along the first forward direction, and then irradiate, with the laser beam L, first cells in a column other than the j-th column along the first forward direction; and irradiate, with the laser beam L, first cells in the i-th row along the second forward direction, and then irradiate, with the laser beam L, first cells in a row other than the i-th row along the second forward direction.

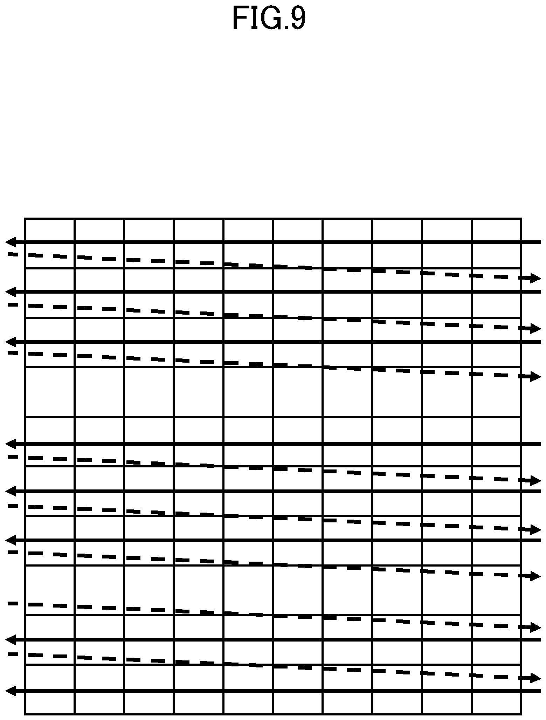

Figure 9 is a diagram illustrating one-way two-pass processing by the laser processing machine of the present embodiment. Arrows in Figure 9 indicate the movement directions of the laser processing head 30 (laser beam L) .

In one-way two-pass processing, the laser processing machine 1 first irradiates, with the laser beam L, each first cell in the first to m-th columns from the first forward direction, similarly to one-way one-pass processing. Thereafter, as illustrated in Figures 5 and 9, the laser processing machine 1 uses the moving mechanism 20 to move the laser processing head 30 from cell C_{n,m} to cell C_{n,1} in the n-th row along the second reverse direction, and irradiates each first cell in the n-th row with the laser beam L. Next, the laser processing machine 1 uses the moving mechanism 20 to move the laser processing head 30 from cell C_{n-1,m} to cell C_{n-1,1} in the (n-1)-th row along the second reverse direction, and irradiates each first cell in the second row with the laser beam L. The above is repeated similarly to the first row.

Note that the processing from the second direction in one-way two-pass processing is not limited to the above-described processing. For example, the moving mechanism 20 is used to move the laser processing head 30 from cell C_{1,1} to cell C_{1,m} in the first row along the second forward direction, and each first cell in the first row is irradiated with the laser beam L. Next, the laser processing machine 1 uses the moving mechanism 20 to move the laser processing head 30 from cell C_{2,1} to cell C_{2,m} in the second row along the second forward direction, and irradiates each first cell in the second row with the laser beam L. The above is repeated similarly to the n-th row.

### [Modification of one-way two-pass processing]

One-way two-pass processing may irradiate, with the laser beam L, each first cell in each column along the first forward direction and then irradiate, with the laser beam L, each first cell in each row along the second forward direction, as described above, or irradiate with the laser beam L in alternation along the first forward direction and the second forward direction. Specifically, the control unit 53 of the control device 50 controls the moving mechanism 20 to: irradiate, with the laser beam L, first cells in the j-th column along the first forward direction, and then irradiate, with the laser beam L, first cells in the (i+1)-th row along the second forward direction; and irradiate, with the laser beam L, first cells in the (j+1)-th column along the first forward direction, and then irradiate, with the laser beam L, first cells in the i-th row along the second forward direction.

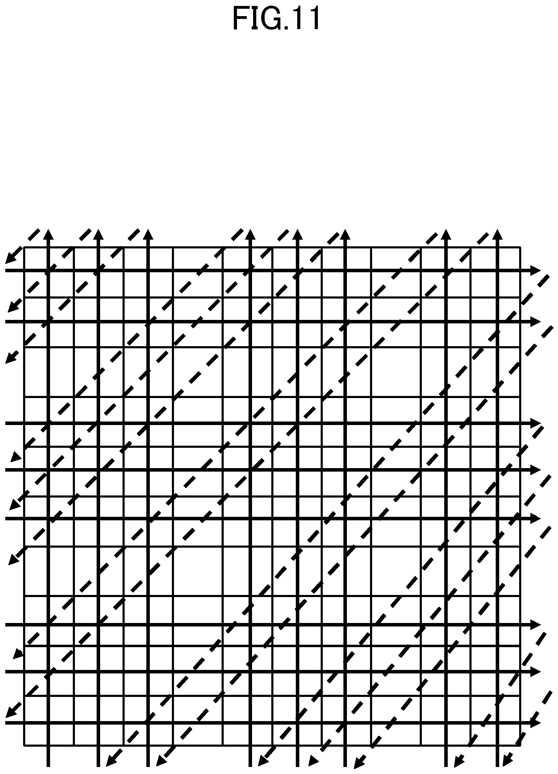

Figure 11 is a diagram illustrating a modification of one-way two-pass processing by a laser processing machine of the present embodiment. Arrows in Figure 11 indicate the movement directions of the laser processing head 30 (laser beam L).

In the modification of one-way two-pass processing, as illustrated in Figures 5 and 11, the laser processing machine 1 uses the moving mechanism 20 to move the laser processing head 30 from cell C_{1,1} to cell C_{n,1} in the first column along the first forward direction, and irradiates each first cell in the first column with the laser beam L. Next, the laser processing machine 1 uses the moving mechanism 20 to move the laser processing head 30 from cell C_{n,1} to cell C_{n,m} in the n-th row along the second forward direction, and irradiates each first cell in the n-th row with the laser beam L.

Subsequently, the laser processing machine 1 uses the moving mechanism 20 to move the laser processing head 30 from cell C_{1,2} to cell C_{n,2} in the second column along the first forward direction, and irradiates each first cell in the second column with the laser beam L. Thereafter, the laser processing machine 1 uses the moving mechanism 20 to move the laser processing head 30 from cell C_{n-1,1} to cell C_{n-1,m} in the (n-1)-th row along the second forward direction, and irradiates each first cell in the (n-1)-th row with the laser beam L.

Similarly, each first cell in the j-th column is irradiated with the laser beam L along the first forward direction, and each first cell in the (i+1)-th row is irradiated with the laser beam L along the second forward direction. Also, each first cell in the (j+1)-th column is irradiated with the laser beam L along the first forward direction, and each first cell in the i-th row is irradiated with the laser beam L along the second forward direction. Further still, each first cell in the (j+2)-th column is irradiated with the laser beam L along the first forward direction and so on, and each first cell in all rows and columns is irradiated with the laser beam L.

The engraving program 54d has information pertaining to operations of the moving mechanism 20, the laser processing head 30, and the assist gas supply device for performing a process of engraving a matrix-type two-dimensional code in the tentative processing pattern or the processing pattern selected manually by the user.

In the control device 50 provided with the above configuration, when the workpiece W is of a material A, the type of assist gas to be used is a gas A, the number of cells in the matrix-type two-dimensional code to be engraved is 41, and the code size of the matrix-type two-dimensional code to be engraved is 15, the processing pattern selection unit 53c of the control unit 53 selects one-way two-pass processing as the tentative processing pattern.

The laser processing machine 1 provided with such a configuration can use the moving mechanism 20 to move the laser processing head 30 and cause the laser beam L to be output from the laser processing head 30, and thereby perform cutting processing and drilling processing of the workpiece W, engraving of a matrix-type two-dimensional code in the surface of the workpiece W, and the like.

### [Laser processing method according to present embodiment]

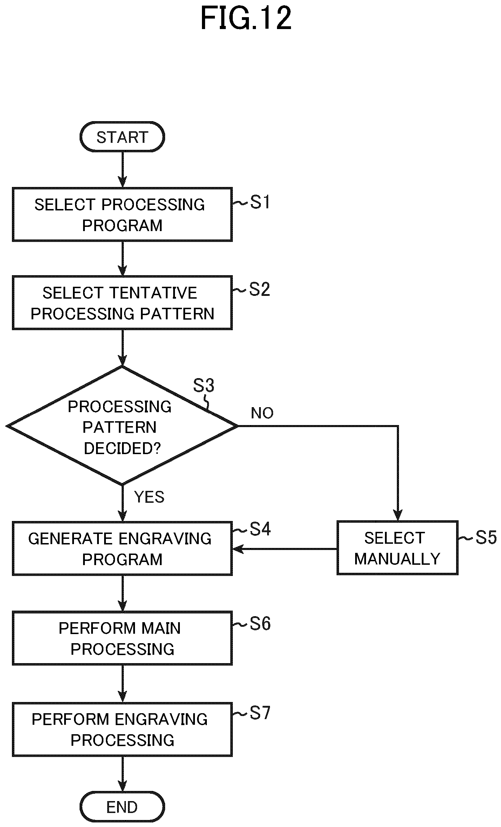

Figure 12 is a flowchart illustrating an example of a laser processing method using a laser processing machine of the present embodiment.

Next, Figure 12 will be referenced to describe a sequential laser processing method of the laser processing machine 1 described above. In outline, the sequential laser processing method selects a tentative processing pattern from a plurality of processing patterns of matrix-type two-dimensional codes on the basis of the selection condition described above. Also, the sequential laser processing method engraves a matrix-type two-dimensional code in the tentative processing pattern or a user-selected processing pattern.

The sequential laser processing method includes: a tentative processing pattern selecting step for selecting a tentative processing pattern from a plurality of processing patterns; an engraving program generating step for generating the engraving program 54d for a matrix-type two-dimensional code on the basis of a processing pattern; a main processing step for laser-processing the workpiece W on the basis of a laser processing program 54a; and an engraving processing step for engraving a matrix-type two-dimensional code in the surface of the workpiece W on the basis of the engraving program 54d.

In the sequential laser processing method, specifically, first, a laser processing program 54a stored in the storage unit 54 of the control device 50 is selected by the user (S1 of Figure 12). Next, the processing pattern selection unit 53c of the control unit 53 selects a tentative processing pattern from the pattern selection table 54c of the storage unit 54 on the basis of the selection condition included in the selected laser processing program 54a (S2: tentative processing pattern selecting step of Figure 12).

The tentative processing pattern selected by the processing pattern selection unit 53c of the control unit 53 of the control device 50 is displayed on the display unit 52. The user checks the tentative processing pattern displayed on the display unit 52. In the case of engraving a matrix-type two-dimensional code in the surface of the workpiece W according to the tentative processing pattern (YES in S3 of Figure 12), the program generation unit 53d generates an engraving program 54d on the basis of the tentative processing pattern and engraving information in the selected laser processing program 54a, and stores the generated engraving program 54d in the storage unit 54 (S4: engraving program generating step of Figure 12).

In the case of not engraving a matrix-type two-dimensional code in the surface of the workpiece W according to the tentative processing pattern (NO in S3 of Figure 12), a freely chosen processing pattern is selected manually by the user operating the input unit 51 of the control device 50 (S5 of Figure 12). Also, when selecting a processing pattern, the user can choose whether or not to use a function of vibrating the laser beam L. The program generation unit 53d then generates an engraving program 54d on the basis of the processing pattern selected manually by the user and engraving information in the selected laser processing program 54a, and stores the generated engraving program 54d in the storage unit 54 (S4 of Figure 12).

In the laser processing machine 1, at the same time as the selection of a processing pattern or after selection, the movement control unit 53a and the laser control unit 53b of the control unit 53 of the control device 50 control the moving mechanism 20 and the laser processing head 30 on the basis of the selected laser processing program 54a, and thereby perform main processing such as cutting and drilling the workpiece W (S6: main processing step of Figure 12).

After main processing is performed, in the laser processing machine 1, the movement control unit 53a and the laser control unit 53b of the control unit 53 of the control device 50 control the moving mechanism 20 and the laser processing head 30 on the basis of the generated engraving program 54d, and thereby perform engraving process to engrave a matrix-type two-dimensional code in the surface of the workpiece W (S7: engraving processing step of Figure 12). According to the above steps, the series of operations in the laser processing method by the laser processing machine 1 according to the present embodiment are performed.

Note that in the sequential laser processing method described above, the engraving processing step is described as being performed after the main processing step, but the method is not limited thereto, and the engraving processing step may also be performed before the main processing step or during the main processing step.

### [Advantages of laser processing machine according to present embodiment]

As described above, the laser processing machine 1 according to the present embodiment is a laser processing machine that engraves, in a surface of a workpiece W, a matrix-type two-dimensional code a matrix-type two-dimensional code in which a first cell as a unit irradiation area and a second cell as a unit non-irradiation area are arranged in a desired array pattern in a first direction and a second direction orthogonal to the first direction, the laser processing machine being provided with a laser processing head 30 that irradiates the workpiece W with a laser beam L and a control unit 53 that controls the laser processing head 30, wherein the control unit 53 includes a processing pattern selection unit 53c, and the processing pattern selection unit 53c selects a tentative processing pattern from a plurality of processing patterns of matrix-type two-dimensional codes on a basis of a selection condition.

Additionally, by being provided with such a configuration, the laser processing machine 1 according to the present embodiment has the advantage that a tentative processing pattern can be selected from a plurality of processing patterns of matrix-type two-dimensional codes on the basis of a selection condition, thereby improving reading limits that cannot be improved solely by changing processing conditions, and an easily readable matrix-type two-dimensional code can be engraved.

Also, in the laser processing machine 1 according to the present embodiment, the selection condition includes at least one of the number of cells or the code size of the matrix-type two-dimensional code. Providing such a configuration has the advantage that an appropriate tentative processing pattern can be selected according to the matrix-type two-dimensional code to be engraved.

Further, the laser processing machine 1 according to the present embodiment is provided with an assist gas supply device, and the selection condition includes information pertaining to an assist gas. Providing such a configuration has the advantage that an appropriate tentative processing pattern can be selected in consideration of the type, output, and the like of the assist gas.

Further still, in the laser processing machine 1 according to the present embodiment, the selection condition includes information pertaining to the material of the workpiece W. Providing such a configuration has the advantage that an appropriate tentative processing pattern can be selected in consideration of the type of material of the workpiece W.

Also, in the laser processing machine 1 according to the present embodiment, the control unit 53 includes a program generation unit 53d, the program generation unit 53d generating an engraving program 54d on the basis of a processing pattern. Providing such a configuration has the advantage that the engraving program 54d is generated separately from the laser processing program 54a, and thus when the processing pattern is changed, rework time can be reduced by eliminating the need for rework involving recreation on a programming device.

Further, in the laser processing machine 1 according to the present embodiment, the plurality of processing patterns of matrix-type two-dimensional codes include a first processing pattern in which first cells are irradiated with the laser beam L along a first direction, and a second processing pattern in which first cells are irradiated with the laser beam L along a first direction and then irradiated with the laser beam L again along a second direction. Providing such a configuration has the advantage that the first processing pattern with short processing time and the second processing pattern with high processing precision can be used appropriately depending on the matrix-type two-dimensional code to be engraved.

Further still, the laser processing machine 1 according to the present embodiment is configured to allow for manual changing of the tentative processing pattern selected by the processing pattern selection unit 53c. Providing such a configuration has the advantage that the tentative processing pattern can be changed on the laser processing machine 1, thereby shortening rework time.

### [Modifications]

The above describes a preferred embodiment of the present invention, but the technical scope of the present invention is not limited to the scope indicated in the embodiment described above. Various changes or alterations can be applied to the embodiment described above.

For example, in the embodiment described above, the selection condition is described as including the number of cells and the code size of a matrix-type two-dimensional code, information pertaining to an assist gas, and information pertaining to the workpiece W material, but is not limited thereto. The selection condition may also not include the conditions described above.

In the embodiment described above, the laser processing machine 1 is described as being provided with an assist gas supply device, but is not limited thereto, and the laser processing machine 1 may also not be provided with an assist gas supply device.

Also, in the embodiment described above, the control unit 53 is described as including a program generation unit 53d, the program generation unit 53d generating an engraving program 54d on the basis of a processing pattern, but the control unit 53 is not limited thereto. The control unit 53 may also not include the program generation unit 53d. Also, the engraving program 54d may be included in advance in the laser processing program 54a.

In the embodiment described above, the plurality of processing patterns of matrix-type two-dimensional codes are described as including a first processing pattern in which first cells are irradiated with the laser beam L along a first direction, and a second processing pattern in which first cells are irradiated with the laser beam L along a first direction and then irradiated with the laser beam L again along a second direction, but are not limited to. The plurality of processing patterns of matrix-type two-dimensional codes may also not include the first processing pattern and the second processing pattern.

The embodiment described above is described as being configured to allow for manual changing of the tentative processing pattern selected by the processing pattern selection unit 53c, but is not limited thereto. The tentative processing pattern selected by the processing pattern selection unit 53c may also not be changeable manually.

In the embodiment described above, the moving mechanism 20 is described as being configured to drive at least one of the laser processing head 30 and the processing table 21 so that the laser processing head 30 and the processing table 21 move relative to one another, but is not limited thereto. For example, the laser processing head 30 and the processing table 21 may both be fixed, and the galvano scanner unit 32 may function as the moving mechanism 20 by moving the laser beam L radiated from the laser processing head 30 in the first direction and the second direction. In the case where the moving mechanism 20 is configured to drive at least one of the laser processing head 30 and the processing table 21 so that the laser processing head 30 and the processing table 21 move relative to one another, a matrix-type two-dimensional code that is larger than the movable range of the galvano scanner unit 32 can be engraved.

The embodiment described above is described as performing the engraving processing step after the main processing step, but is not limited thereto, and may also perform the main processing step after the engraving processing step. It is also possible to perform the engraving processing step only, without performing the main processing step.

### Reference Signs List

1: laser processing machine
10: laser oscillator
12: process fiber
20: moving mechanism
21: processing table
22: X-axis carriage
23: Y-axis carriage
30: laser processing head
30a: housing
30b: nozzle
31: collimating lens
32: galvano scanner unit
33: first scanning section
33a: first scanning mirror
33b: first drive section
34: second scanning section
34a: second scanning mirror
34b: second drive section
35: bend mirror
36: condensing lens
50: control device
51: input unit
52: display unit
53: control unit
53a: movement control unit
53b: laser control unit
53c: processing pattern selection unit
53d: program generation unit
54: storage unit
54a: laser processing program
54b: generation library
54c: pattern selection table
54d: engraving program
L: laser beam
W: workpiece

## Claims

1. A laser processing machine configured to engrave, in a surface of a workpiece, a matrix-type two-dimensional code in which a first cell as a unit irradiation area and a second cell as a unit non-irradiation area are arranged in a desired array pattern in a first direction and a second direction orthogonal to the first direction, the laser processing machine comprising:
a laser processing head configured to irradiate the workpiece with a laser beam; and
a control unit configured to control the laser processing head, wherein
the control unit includes a processing pattern selection unit, and
the processing pattern selection unit is configured to select a tentative processing pattern from a plurality of processing patterns of the matrix-type two-dimensional code on a basis of a selection condition.

2. The laser processing machine according to claim 1, wherein
the selection condition includes at least one of a number of cells or a code size of the matrix-type two-dimensional code.

3. The laser processing machine according to claim 1 or 2, comprising:
an assist gas supply device, wherein
the selection condition includes information pertaining to an assist gas.

4. The laser processing machine according to any one of claims 1 to 3, wherein
the selection condition includes information pertaining to a material of the workpiece.

5. The laser processing machine according to any one of claims 1 to 4, wherein
the control unit includes a program generation unit, and
the program generation unit is configured to generate an engraving program on a basis of the processing pattern.

6. The laser processing machine according to any one of claims 1 to 5, wherein
the plurality of processing patterns of the matrix-type two-dimensional code include
a first processing pattern in which the first cell is irradiated with the laser beam along a first direction, and
a second processing pattern in which the first cell is irradiated with the laser beam along the first direction and then irradiated with the laser beam again along the second direction.

7. The laser processing machine according to any one of claims 1 to 6, wherein
the laser processing machine is configured to allow for manual changing of the tentative processing pattern selected by the processing pattern selection unit.

8. A laser processing method for engraving, in a surface of a workpiece, a matrix-type two-dimensional code in which a first cell as a unit irradiation area and a second cell as a unit non-irradiation area are arranged in a desired array pattern in a first direction and a second direction orthogonal to the first direction, the laser processing method comprising:
selecting a tentative processing pattern from a plurality of processing patterns of the matrix-type two-dimensional code on a basis of a selection condition.

9. A laser processing program for engraving, in a surface of a workpiece, a matrix-type two-dimensional code in which a first cell as a unit irradiation area and a second cell as a unit non-irradiation area are arranged in a desired array pattern in a first direction and a second direction orthogonal to the first direction, the laser processing program:
causing a control unit to perform a selection process for selecting a tentative processing pattern from a plurality of processing patterns of the matrix-type two-dimensional code on a basis of a selection condition.
